Europäisches Patentamt

European Patent Office

Office européen des brevets

(11) Publication number: **0 393 784**
**A1**

# EUROPEAN PATENT APPLICATION

(21) Application number: **90200940.6**

(22) Date of filing: **17.04.90**

(51) Int. Cl.⁵: **G07F 7/10, G07C 9/00**

(30) Priority: **17.04.89 NL 8900949**

(43) Date of publication of application:
**24.10.90 Bulletin 90/43**

(84) Designated Contracting States:
**DE FR GB NL**

(71) Applicant: **N.V. Nederlandsche**
**Apparatenfabriek NEDAP**
**Oude Winterswijkseweg 7**
**NL-7141 DE Groenlo(NL)**

(72) Inventor: **Hogen Esch, Johannes Harm Lukas**
**Hoge Veld 75**
**NL-7122 ZN Aalten(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **Multifunctional identification and information card.**

(57) An identification and information card comprising an integrated electronic circuit including a processor. The electronic circuit is capable of contactlessly transmitting data to, and receiving data from, a data acquisition system in response to an electromagnetic interrogation field. The card is provided with a magneto/optical memory which contains data encoded according to a secret key. The coded data can be read by the data acquisition system and converted into electrical signals which are contactlessly transmitted to the card and are decoded by the processor. The card contains security data for protection against unauthorized use.

FIG. 1

## Multifunctional identification and information card

This invention relates to an identification and information card comprising an integrated electronic circuit including a processor, an operating memory, a program and data memory, said integrated electronic circuit being capable of contactlessly transmitting information to, and receiving information from, a data acquisition system.

Such a card can be used, for example, as a bank pass, as a credit card, as an ID card, as an admission control card, as a carrier of, for example, medical data concerning the bearer of the card, etc.

Netherlands patent specification 176404 discloses a detection plate which, for example, as an admission control card, can be made of credit card size, and comprises an integrated electronic circuit with a memory storing binary data. The electronic circuit can be contactlessly activated by an electromagnetic interrogation field generated by a transmitter/receiver, and then generates electrical signals presenting the binary data, which can be detected by the transmitter/receiver.

Furthermore, Netherlands Patent Application No. 8700861 discloses a mini-data-carrier which can also be made in the form of a credit card and includes a contactlessly reprogrammable memory. In this case, too, the integrated electronic circuit of the data carrier can be activated by an interrogation field, and the data carrier does not require a supply battery of its own.

Although the known identification and information cards are excellently suitable for many purposes, the amount of information that can be stored in the memory of the cards is limited.

At the present time, personal data is often stored in central data banks scattered throughout various authorities, agencies, firms or hospitals, and the individual in question has no control over what is being done with such personal data. Privacy could be considerably enhanced if such personal data should remain in possession of the person to which it relates, and if such person could decide himself as to who may use which information and when. To achieve this, however, requires a storage medium with a very large storage capacity. For example, the storage medium should be programmable and also re-programmable in order that the data in the medium may be changed and supplemented. In addition, the storage medium must be well safeguarded against unauthorized reading and must be simple to carry.

Furthermore, the storage medium should preferably be contactlessly readable and (re)-programmable.

There is accordingly a need for an identification and information card with a very large storage capacity, so that the card may contain a personal data bank relating to the bearer of the card, which data bank can only be consulted with the bearer's consent.

It is an object of the present invention to provide such an identification and information card.

To this effect, according to the present invention, an identification and information card of the kind described above is characterized by a magneto/optical memory which in operation contains information encoded according to a secret key, said secret key being stored in the integrated electronic circuit, and said integrated electronic circuit being arranged to decode the information encoded according to the secret key after the conversion of said information into electrical signals, and to transmit it to the data acquisition system, and to encode electrical data signals according to said secret key.

A good safeguard against unauthorized use of an identification and information card according to the present invention can be provided by comparing protective data stored in the card with control data collected at the moment of a request for access to a data acquisition system.

Optimum security can be provided by causing one or more of the following aspects to be expressed in the protection and control data:
- Knowledge by the person, i.e. the bearer or owner of the card;
- Ability of the person;
- Physical characteristics of the person;
- Possession of a key article.

In this connection it is of importance that information of, or about, the person should not be divulged to the data acquisition system, because in that case a recording could be made of such information, which could then be reproduced to simulate a request for access to the data acquisition system. Access could then be obtained improperly.

According to a further elaboration, the present invention contemplates combining in the card a personal data bank with one or a combination of the above security aspects.

The invention will now be described in more detail with reference to the accompanying drawings.

Fig. 1 shows schematically the communication channel via a card according to the present invention between an individual and a data acquisition system; and

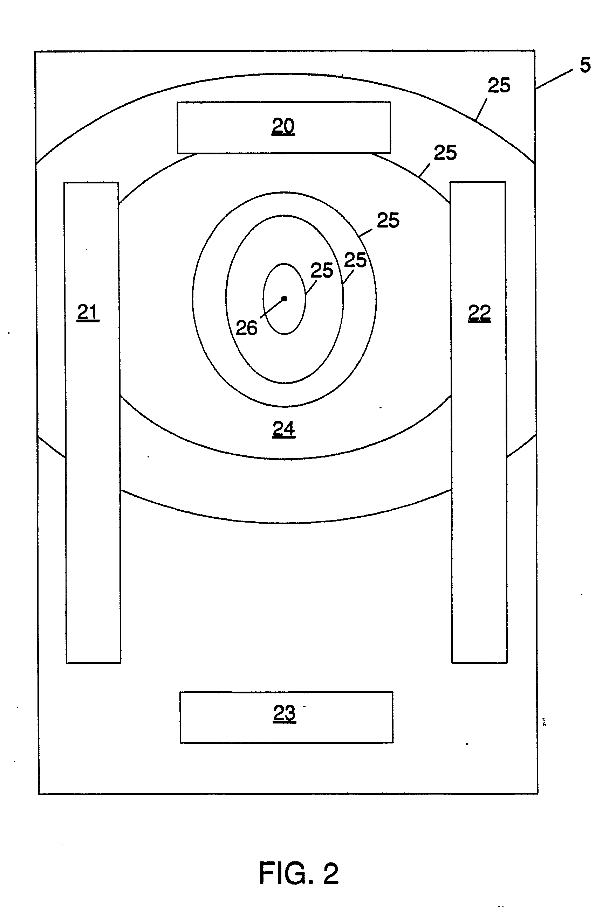

Fig. 2 shows schematically an elevational view of one embodiment of a card according to the present invention.

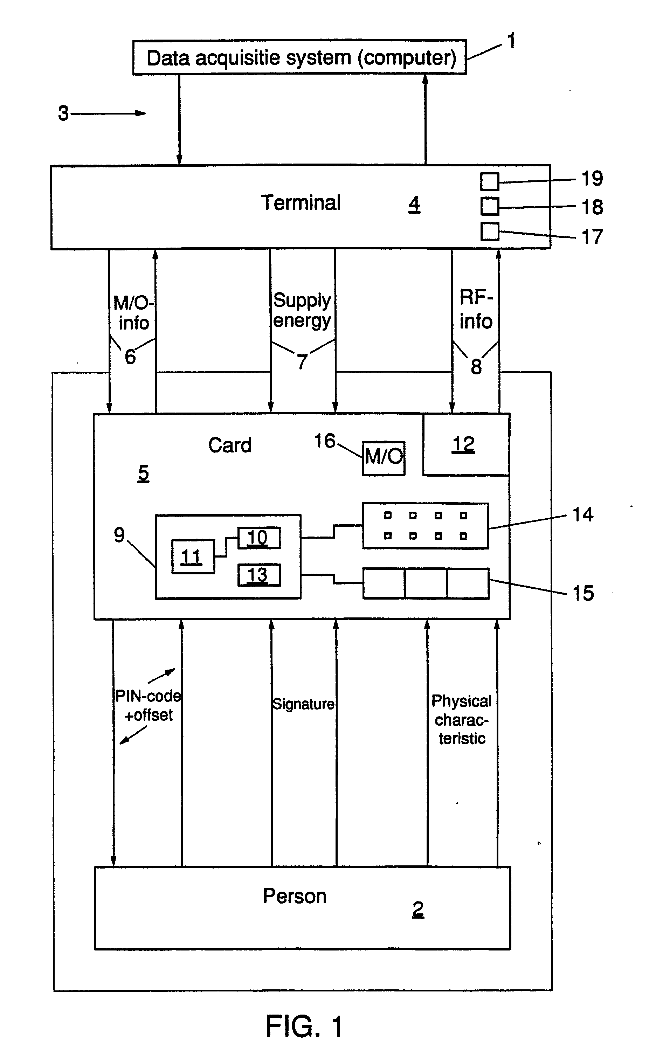

Fig. 1 illustrates a block diagram of the connection between a data acquisition system or (central) computer 1, which is supposed to be safeguarded, and an individual 2. The connection 3 between the central computer and a terminal 4 with which a card 5 is read, which for example is a public telephone line, is supposed not to be safeguarded, so that unauthorized persons may have access to this line. This also applies to the connections 6, 7, 8 between the terminal and the card and the other way round. The connections between the card and the individual and the other way round are supposed to be safe because the individual has the card in her or his possession, so that these connections cannot be tampered with without the cooperation of the individual.

The card 5 according to the invention has preferably the dimensions of a credit card with international standard dimensions and contains an integrated electronic circuit 9 connected with one or more coils (not shown), and input means such as input sensors 14 for receiving data in the form of knowledge and/or capability and/or physical characteristics of the individual and passing it to the electronic circuit. The integrated circuit comprises a microprocessor 10, a memory or storage 11, which may comprise a non-volatile program and data memory, a transmitting/receiving circuit 12 for contactless radio-frequency data transmission, and a circuit 13 for receiving and processing signals from the input sensor. The card may also comprise a display 15, for example, a liquid crystal display (LCD), by means of which data is transmitted from the card to the individual, without it being necessary for such data to be known to the terminal and/or the data acquisition system.

Furthermore, the card contains a high-capacity memory which may be a magneto/optical memory. Such a memory may occupy one or more areas of the card, and may consist, for example, of a plurality of linear tracks. Using such a known per se magneto-optical memory, and using a card of normal size on one side only, a storage capacity of as high as 80 megabytes can be provided. The data stored in this memory has been encoded by means of an encryption function which is only known to the microprocessor in the card. Supply energy and clock pulses are transmitted to channel 7 electromagnetically in known manner. Contactless radio-frequency data transmission from the card to a transmitter/receiver, through channel 8, is preferably effected in a system according to the present invention in two ways, i.e.:

1. Transmission of an identification number only over a relatively large distance of, for example, 70 cm for identification purposes. If necessary, a distinction can be made between various identification cards present in the transmitting/receiving field at the same time, by using, for example, a selective calling procedure in accordance with Netherlands patent application 8802718. For this purpose the terminal comprises an RF interface 17.

2. Transmission through a relatively small distance of several centimeters, in which, through channel 6, for example, a bidirectional (full-duplex) data transmission takes place between the terminal and the card, and in which, via the terminal, the encoded magneto/optical data stored in the card is also transmitted to the microprocessor and vice versa.

For this purpose the terminal has a reader 18 capable of reading the magneto/optical data stored on the card, and can convert it into electrical signals. As the data stored in the magneto/optical memory has been encoded according to a secret key, this data is not suitable for use by the terminal and the data acquisition system.

The electrical signal representing the data encoded according to a secret key are returned wirelessly to the card through channel 6 in known manner and are stored in a portion of memory 11 used as a working storage. If pre-determined conditions have been satisfied, the data thus received back by the card is fully or partially decrypted by the processor 10. The decrypted data is then again wirelessly returned electromagnetically in known manner to the terminal, which subsequently can pass the data to the computer.

The magneto/optical memory is a known per se memory consisting of a magnetic layer formed by an amorphous mixture of the rare earth metal terbium, iron and cobalt, embedded between two dielectric layers. Through local heating by a laser and an external (modulated) magnetic field, the polarity of the magnetization can be locally changed in direction. To read the data, the polarized energy of the laser is considerably decreased, and the polarity of the magnetization is detected at the memory sites by measuring the direction of polarization of the reflected laser light. The so-called Kerr effect brings about a change in the direction of polarization of the laser light as a result of the polarity of the magnetic material. To erase data recorded, the magnetic material is heated by means of the laser to a temperature above the Curie temperature, simultaneously pole changing the external magnetic field, whereby the differences in magnetization of the magnetic material disappear. The two dielectrical layers are provided to protect the magnetic material against corrosion. Owing to the minute dimensions of the laser beam, ca. 1 micrometer, very high data densities can be achieved in the magneto/optical memory, which for example may comprise a plurality of parallel extending linear tracks on the back of the card.

The first security aspect, knowledge present in the individual, may consist, for example, of a personal identification number or PIN-code, which must be entered into the card through keys forming part of the input means. To prevent that the same keys are used every time, which could lead to markings on the card, a random number can be communicated to the individual from a PIN-code offset generator 19 of the terminal, for example, via the display 15 on the card, which number is added by the individual to, or subtracted from, the code known to her or him, whereafter the newly calculated value is keyed in as a PIN-code. If desired, a "carry" obtained from the addition or subtraction may be left out of account. The processor in the card checks whether this PIN-code is correct, taking into account the random offset value. Data entered through the keys may be transmitted, for example, to the integrated electronic circuit by means of a matrix of switches provided under the keys.

Only if the PIN-code has been correctly entered will the processor subsequently partially or fully decrypt the encrypted data received through the terminal.

The second security aspect, ability of the individual, may consist, for example, in placing a signature, which may be examined as regards the shape of signature and also as regards the dynamic movements of the writing tool in relation to the time. As was the case with the PIN-code, it is of importance that the terminal and/or the data acquisition system should get no information about the signature.

The input sensor for the signature is therefore also integrated in the card and, as shown in Fig.4, may consist, for example, of four piezofoil sensors 20 to 23 on the four sides of a rectangular area 24 within which the signature must be placed, for example, inserting a sheet of paper. If the signature is now placed with, for example, an intermittently ultrasonically vibrating writing tool, the differences in travel time of the surface vibrations 25 between the tip 26 of the writing tool and the four piezosensors can be used to determine where the tip of the writing tool is at any one time.In addition to vibrating the tip of the writing tool, these surface vibrations can be generated by vibrating the entire card, and using a normal pen as a writing tool, for which purpose, for example, the card may be placed on, for example, an intermittently ultrasonically vibrating substrate.The advantage of this type of input sensor is that only few electrical connections with the integrated electronic circuit are required. In addition, a PIN-code entered through keys can also be transmitted to the integrated electronic circuit in this manner, so that a combination of the two security aspects only requires the second type of sensor. For this purpose, in the area 24, a plurality of numbered zones, serving as keys, are indicated on the card, and a number of the zones are successively pressed with the finger or a pen or the like while the card is lying on the vibrating substrate.

As regards the third security aspect, physical features of the individual, for example, a fingerprint, it is also true that optimum safeguarding is only possible if the pertinent data need not be divulged to the terminal and/or the data acquisition system, i.e., if use is made of, for example, electrical or ultrasonic sensors in the card, and the incoming data being processed and examined in the card.

The fourth security aspect, the possession of a key article, is the possession of the card proper, which may be provided with a unique code and/or a unique encryption/decryption algorithm, for example, according to the decryption/encryption standard DES, and which key article may further be provided with other characteristics of genuineness, such as a hologram or fluorescent inks. The last security aspect is of course always applicable with the multifunctional identification and information card; the other security aspects may be provided for use as an option to suit the required security level.

The processor may be arranged so that more encrypted data is decrypted according as more security conditions have been satisfied. Conversely, a data acquisition system may in certain cases make higher demands on security than in other cases. Thus, to receive money from a money dispensing machine, checking the PIN-code could be all that is needed, but, for example, to get access to a secret military installation, or to obtain medical data, the signature and/or a physical characteristic of the bearer of the card could be checked.

The data to be provided by the card to a data acquisition system depends not only on the control data entered by the user, but also on the control data to be provided by the data acquisition system, which determines whether the acquisition system is authorized to receive information from the card and, if so, which data the acquisition system can receive.

It is noted that, after reading the above, various modifications will readily occur to those skilled in the art, Thus, with some data acquisition systems, a direct connection can be effected without the intermediary of a terminal.

Furthermore, the data transmission between terminal or data acquisition system may be monodirectional (half-duplex). It is also possible, when an intermittently vibrating substrate is used for the card at the terminal or an intermittently vibrating writing tool is used at the terminal, for the intermittent rhythm of the vibration to be determined by the processor of the card. The processor would then, for example, transmit data through channel 8 which controls the vibrator of the substrate or writing tool.

The above and similar modifications are deemed to fall within the scope of the present invention.

## Claims

1. An identification and information card comprising an integrated electronic circuit including a processor, an operating memory, a program and data memory, which integrated electronic circuit is capable of contactlessly transmitting data to, and receiving data from, a data acquisition system in response to an electromagnetic interrogation field, characterized by a magneto/optical memory which in operation contains data encoded according to a secret key, the secret key being stored in the integrated electronic circuit, and wherein the integrated electronic circuit is arranged to decode the data encoded according to the secret key after conversion of such data into electrical signals and transmitting it to the data acquisition system, and to encode electrical data signals according to the secret key.

2. An identification and information card as claimed in claim 1, characterized in that the integrated electronic circuit is arranged, in an interrogation field generated by a transmitter/receiver of a data acquisition system, at a relatively large distance from the transmitter/receiver, in a first mode, to transmit an identification code, while at a relatively small distance from the transmitter/receiver the integrated electronic circuit switches to a second mode in which data can be exchanged with the data acquisition system at a relatively high data transmission speed.

3. An identification and information card as claimed in claim 2, characterized in that the integrated electronic circuit comprises a threshold value detector which is capable of detecting the strength of the interrogation field at the card and when a pre-determined threshold value is exceeded switches from the first to the second mode,

4. An identification and information card as claimed in claim 1, 2 or 3, characterized by input means for the entry of individual-linked security data concerning the bearer of the card, which security data, in operation, can be compared by the integrated electronic circuit with corresponding security data stored in the integrated electronic circuit without the security data reaching the data acquisition system.

5. An identification and information card as claimed in claim 4, characterized in that the stored security data comprises data related to the knowledge and/or capability and/or physical characteristics of the bearer of the card.

6. An identification and information card as claimed in claim 4 or 5, characterized in that the input means comprise manually operable switch means for entering a PIN-code.

7. An identification and information card as claimed in any of claims 4-6, characterized in that the input means comprise two or more piezo elements arranged along the edges of an area within which pressure can be exercised on the card to generate vibratory waves which are detected by the piezo elements and converted into electrical signals, which are passed to the integrated electronic circuit.

8. An identification and information card as claimed in any of claims 4-7, characterized in that the input means are arranged to enter different types of security data, which types correspond to pre-determined parts of the data encoded according to a secret key, and that the integrated electronic circuit is arranged only to decode the coded data associated with the entered types of security data.

9. An identification and information card as claimed in any of the preceding claims, characterized in that the integrated electronic circuit is arranged only after receiving a pre-determined signal from the data acquisition system to fully or partially decode data and pass it to the data acquisition system.

10. An identification and information card as claimed in any of the preceding claims, characterized by a rectifying circuit associated with a receiving circuit and serving to provide supply energy to the integrated electronic circuit.

11. An identification and information card as claimed in claim 7, characterized by the provision of a key pattern in said area.

12. A system for transmitting, processing and storing data, comprising a plurality of identification and information cards as claimed in any of claims 1-10 and at least one data acquisition system arranged to cooperate with such identification and information cards, characterized in that said at least one data acquisition system comprises a reader for reading data stored in a magneto/optical memory of an identification and information card and for converting the data read into electrical signals, which are returned to the identification and information card.

13. A system as claimed in claim 12, characterized by a central computer and at least one terminal connected therewith, said terminal comprising the reader.

14. A system as claimed in claim 12 or 13, characterized in that the data acquisition system is provided with a writing tool having a tip which, in operation, vibrates intermittently.

15. A system as claimed in claim 12 or 13, characterized in that the data acquisition system comprises a platform which in operation vibrates intermittently.

16. A system as claimed in claim 14 or 15, characterized in that the intermittently vibrating tip or platform is controlled by electrical signals transmitted by the processor of a card to the data acquisition system.

FIG. 1

FIG. 2

European Patent Office

**EUROPEAN SEARCH REPORT**

Application Number

EP    90 20 0940

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0138219 (TOSHIBA)<br>* abstract; figures 1-10 * | | G07F7/10<br>G07C9/00 |
| | * page 3, line 1 - page 8, line 33 * | 1, 13 | |
| A | | 4, 5, 12 | |
| | --- | | |
| Y | US-A-4757185 (Y. ONISHI)<br>* abstract; figures 1, 2 * | | |
| | * column 3, line 17 - column 4, line 55 * | 1, 13 | |
| A | * column 4, line 56 - column 5, line 14 * | 2, 10 | |
| | --- | | |
| A | GB-A-2201125 (DE LA RUE SYSTEMS)<br>* abstract; claims 1-5; figures 1-3 * | 1, 4-7 | |
| | --- | | |
| A | US-A-4683372 (H. MATSUMOTO)<br>* column 1, lines 21 - 45; figures 1-7 * | 9 | |
| | --- | | |
| D,A | DE-A-2748584 (NEDAP)<br>* claims 1-11 * | 2, 10 | |
| | --- | | |
| A | GB-A-2181582 (V.C. BLACKWELL) | | |
| | --- | | **TECHNICAL FIELDS SEARCHED (Int. Cl.5)** |
| A | EP-A-0197535 (SIEMENS) | | |
| | --- | | G07F |
| A | US-A-4582985 (B. LOFBERG) | | G07C |
| | --- | | G06K |
| A | EP-A-0147337 (CII HONEYWELL BULL) | | |
| | ----- | | |

The present search report has been drawn up for all claims

| Place of search | Date of completion of the search | Examiner |
|---|---|---|
| THE HAGUE | 05 JULY 1990 | DAVID J.Y.H. |